# EUROPEAN PATENT APPLICATION

(11) **EP 3 135 519 A1**
(43) Date of publication of application: **01.03.2017**
(21) Application number: 16185501.0
(22) Date of filing: 24.08.2016
(51) Int. Cl.: B60J 7/08

(54) **TARPAULIN CARRIAGE AND FASTENING MECHANISM FOR DUMPERS**

(30) Priority: 27.08.2015 TR 201510626
(71) Applicant: Tirsan Treyler Sanayi Ve Ticaret Anonim Sirketi, 54580 Sakarya (TR)
(72) Inventor: DINDAR, Seyit, 54580 Sakarya (TR)
(74) Representative: Dereligil, Ersin

(57) **Abstract**

Present invention relates to a tarpaulin carriage and fastening mechanism for half pipe truck dumpers (1) and semi-trailer dumpers (1) that are used for carrying cargo, attaching the tarpaulin to the dumper (1) and supporting it on the dumper (1), incorporating following components that allow the tarpaulin supporting console (4) to rotate and to be attached to the dumper (1); console mounting bushes (42) attached to the tarpaulin housing (41), bearing bushes (6) fastened to the dumper (1), a bearing pin located inside the said bearing bushes (6) and console mounting bushes (42), attaching them to each other.

## Description

### Technical Field

Present invention relates to a tarpaulin carriage and fastening mechanism for half pipe truck dumpers and semi-trailer dumpers that are used for carrying construction materials, excavation debris, demolition debris or mine ores on highways or off the road.

Present invention particularly relates to a new constructive structure allowing tarpaulins of half pipe dumpers that are used for carrying construction materials, excavation debris, demolition debris or mine ores on highways or off the road to be supported on the vehicle in compliance with the laws and regulations.

### Background of the Invention

Tarpaulin mechanisms that are attached along the sides of dumpers are in highest demand in European and Russian markets. However, "L" shaped supports are welded, riveted or bolted to the top of the dumper body to carry tarpaulin mechanisms. When this structure is incorporated, the width of the vehicle exceeds the maximum allowed vehicle width of 2550 mm. Therefore, these vehicles fail to conform to the regulations. In order to avoid any problems during the periodic motor vehicle inspections, welded tarpaulin supports are cut and then re-welded and bolted supports are removed and then reinstalled following the inspection. When welded type tarpaulin supports are damaged, it is not possible to replace them without modifying the structure.

Consequently, it is deemed necessary to introduce an improvement in the technical field due to above mentioned problems, considering that solutions that are currently available are inadequate.

### Objective of Invention

Inspired by the state of the art, present invention aims at eliminating above mentioned problems.

One of the objectives of present invention is to make sure that the tarpaulin is supported in compliance with the regulations.

One other objective of present invention is to eliminate the need to remove or cut supporting consoles prior to periodic motor vehicle inspections.

Another objective of present invention is to make it possible to install replacement tarpaulin supports following damage without the need for any modification.

Consequently, a tarpaulin carriage and fastening mechanism for half pipe truck dumpers and semi-trailer dumpers that are used for carrying cargo, attaching the tarpaulin to the dumper and being supported by the dumper, incorporating following components, is developed to fulfill above mentioned objectives;
- a tarpaulin rolling mechanism on which the tarpaulin, that is used to cover the dumper body with a view to protect the cargo on the dumper body against adverse weather conditions such as rain, snow or dust, is rolled to be supported on the dumper, as required,
- a tarpaulin supporting console allowing the tarpaulin and tarpaulin rolling mechanism to be supported together in rolled form on the dumper,
- a tarpaulin housing located on the said tarpaulin supporting console, inside of which the tarpaulin rolled on the tarpaulin rolling mechanism is located,
- a mounting duct located on the mounting lug of the tarpaulin supporting console,
- a mount located inside the mounting duct in cases where the tarpaulin supporting console is located outside the dumper,
- a supporting console fastener passing through the mount, fastening the tarpaulin supporting console vertically in place.

The tarpaulin carriage and fastening mechanism also incorporates following components:
- following components that help the tarpaulin supporting console to rotate and to be attached to the dumper:
   o console mounting bushes fastened to the tarpaulin housing,
   o bearing bushes mounted to the dumper,
   o bearing pin located inside the said bearing bushes and console mounting bushes, attaching them to each other.

Structural and characteristic features of present invention as well as all advantages thereof can be understood clearly with the help of following diagrams and detailed descriptions providing reference to these diagrams and thus assessment of the patent should be made by reading this application together with this diagram and detailed description.

### Diagrams Describing Invention

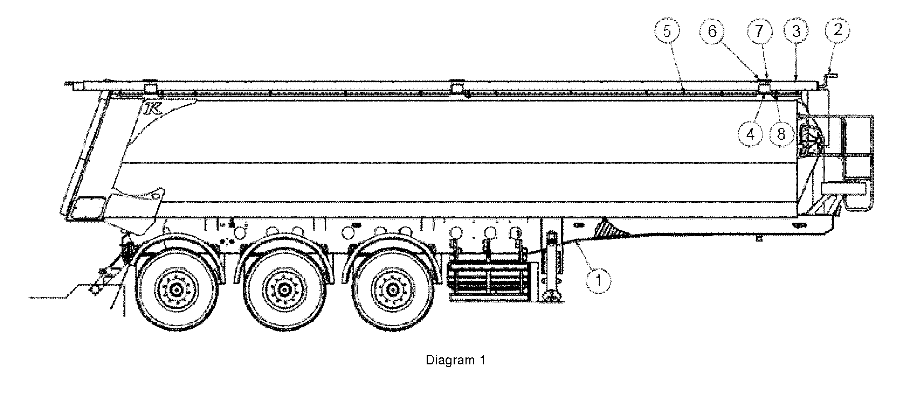

Diagram 1, two dimensional side views of a dumper on which the carriage and fastening mechanism constituting the subject of present invention is located.

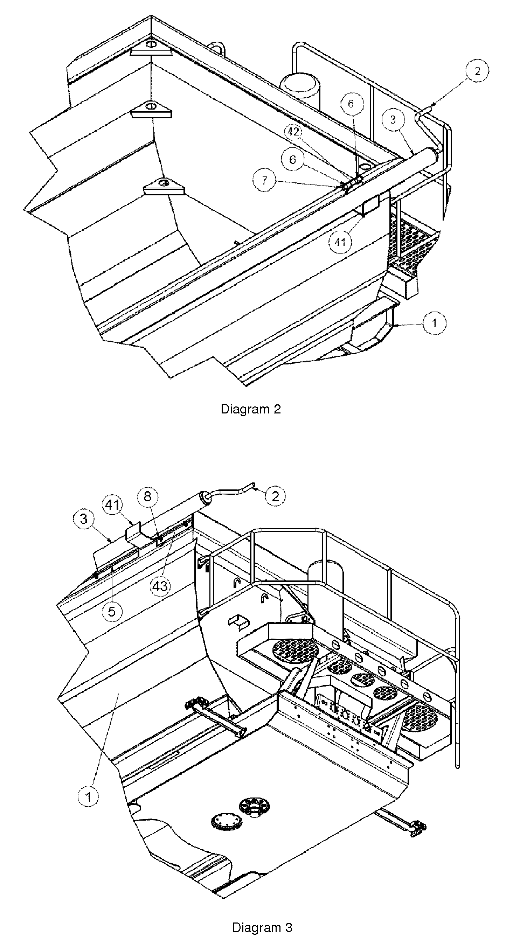

Diagram 2, top perspective view of the front of the dumper.
Diagram 3, bottom perspective view of the front of the dumper.

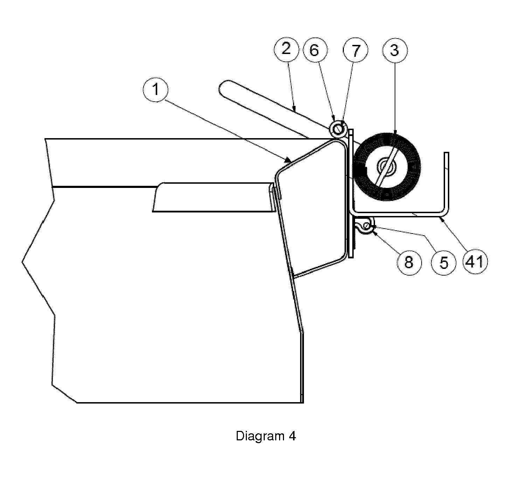

Diagram 4, detailed section view of the carriage and fastening mechanism constituting the subject of present invention.

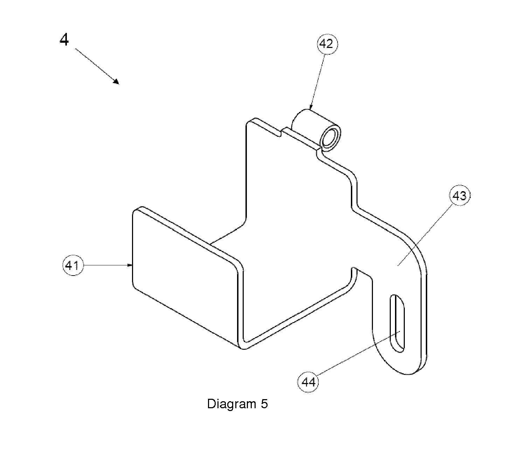

Diagram 5, perspective view of tarpaulin supporting console.

### Description of References

- 1.: Dumper
- 2.: Tarpaulin rolling mechanism
- 3.: Tarpaulin
- 4.: Tarpaulin supporting console
41. Tarpaulin housing
42. Console mounting bushes
43. Mounting lug
44. Mounting duct
- 5.: Supporting console fastener
- 6.: Bearing bush
- 7.: Bearing pin
- 8.: Mount

Drawings are not necessarily scaled and details that are not absolutely required to describe present invention might have been omitted. Additionally, components that are substantially identical or that have substantially identical functions are referred to under the same number.

### Detailed Description of Invention

This detailed description explains preferred structures of the tarpaulin carriage and fastening mechanism constituting the subject of present invention, with the sole purpose of facilitating the comprehension of the subject.

The tarpaulin rolling mechanism, on which the tarpaulin (3), that is used to cover the dumper body with a view to protect the cargo on the dumper body against adverse weather conditions such as rain, snow or dust, is rolled to be supported on the dumper (1), as required, incorporates following components:
- tarpaulin rolling mechanism (2)
- a tarpaulin supporting console incorporating a tarpaulin housing (41), console mounting bushes (42), mounting lug (43) and mounting duct (44),
- supporting console fastener (5),
- bearing bush (6),
- bearing pin (7),
- mount (8).

Technical features and functions of above mentioned components are provided here below:
- Tarpaulin rolling mechanism (2), preferably in the form of a tube, is the component on which the tarpaulin (3) is rolled to be supported on the dumper (1).
- Tarpaulin supporting console (4) is the component that allows the tarpaulin (3) and tarpaulin rolling mechanism (2) to be supported together in rolled form on the dumper (1). Tarpaulin supporting console (4) incorporates a tarpaulin housing (41), console mounting bushes (42), mounting lug (43) and mounting duct (44). Tarpaulin housing (41) provides adequate storage space for the tarpaulin (3) rolled on tarpaulin rolling mechanism (2). Console mounting bush (42) is welded to tarpaulin housing (42). Console mounting bush (42) attaches tarpaulin supporting console (4) to the dumper (1) through bearing pin (7) and bearing bush (6). Console mounting bush (42) also helps the tarpaulin supporting console (4) to rotate around the bearing pin (7).
- Preferably in the form of a cable, supporting console fastener (5) passes through the mount (8) to fasten tarpaulin supporting console vertically in place (4).
- Bearing bushes (6) are welded to upper ends of the sides of the dumper (1). Bearing bushes (6) incorporate bearing pins (7). Bearing bushes support tarpaulin supporting console (4) and attach it to the dumper (1) through bearing pins (7).
- Bearing pins (7) help attaching console mounting bushes (42) that are located on tarpaulin supporting console to bearing bushes (6) that are welded to the dumper (1) and rotating console mounting bush (42) and consequently tarpaulin supporting console (4) that is fastened thereto.
- Mounting lug (43) is the component where the mounting duct (44) is formed on tarpaulin supporting console (4). Preferably in the form of a hook, the mount (8) is located inside the mounting duct in cases where the tarpaulin supporting console (4) is located outside the dumper (1).

The tarpaulin carriage and fastening mechanism constituting the subject of present invention operates as follows: Under normal operation, i.e. in cases where the vehicle is not scheduled for motor vehicle inspection, tarpaulin supporting console (4) is located outside the dumper (1). The mount (8), preferably in the form of a hook is located in a way to pass through the mounting duct (44). Supporting console fastener (5), which is a cable that is preferably tensioned, passes through it. Thus, the mounting lug (43), on which the mounting duct is formed (44), and consequently the tarpaulin supporting console (4) are fastened to the side of the dumper (1) externally and cannot move. The tarpaulin (3) is located inside tarpaulin housing (41). On the other hand, when the vehicle is scheduled for motor vehicle inspection, supporting console fastener (5) is removed from the mount (8). Supporting console fastener (5) is rotated towards the inside of the dumper (1) body. This rotation is made possible by locating the center of the bearing pin (7) inside console mounting bush (42) and the ends of the bearing pin (7) inside bearing bushes (6) that are fastened to the dumper (1). Consequently, tarpaulin supporting console (4) can rotate freely since there is no obstruction preventing rotation in front of the mounting lug (43) once supporting console fastener (5), i.e. the cable, is removed from the mount (8). When rotating operation is completed, supporting console (4) is located inside the dumper (1) body. Therefore the tarpaulin (3) is carried in compliance with the regulations.

## Claims

1. A tarpaulin carriage and fastening mechanism for half pipe truck dumpers (1) and semi-trailer dumpers (1) that are used for carrying cargo, attaching the tarpaulin to the dumper (1) and supporting it on the dumper (1), incorporating following components;
- a tarpaulin rolling mechanism (2) on which the tarpaulin (3), that is used to cover the dumper (1) body with a view to protecting the cargo on the dumper (1) body against adverse weather conditions such as rain, snow or dust, is rolled to be supported on the dumper (1), as required,
- a tarpaulin supporting console (4) allowing the tarpaulin (3) and tarpaulin rolling mechanism (2) to be supported together in rolled form on the dumper (1),
- a tarpaulin housing (41) located on the said tarpaulin supporting console (4), inside of which the tarpaulin (3) rolled on the tarpaulin rolling mechanism (2) is located,
- a mounting duct (44) located on the mounting lug (43) of the tarpaulin supporting console (4),
- a mount (8) located inside the mounting duct (44) in cases where the tarpaulin supporting console (4) is located outside the dumper (1),
- a supporting console fastener (5) passing through the mount (8), fastening the tarpaulin supporting console (4) vertically in place,
- following components that help the tarpaulin supporting console (4) to rotate and to be attached to the dumper (1):
o console mounting bushes (42) fastened to the tarpaulin housing (41),
o bearing bushes (6) mounted to the dumper (1),
o bearing pin (7) located inside said bearing bushes (6) and console mounting bushes (42), attaching them to each other.
